# EUROPÄISCHE PATENTSCHRIFT

(11) **EP 0 473 548 B1**
(45) Veröffentlichungstag und Bekanntmachung des Hinweises auf die Patenterteilung: **09.12.1998**
(21) Anmeldenummer: 91810658.4
(22) Anmeldetag: 20.08.1991
(51) Int. Cl.: C08G 18/58, C08G 18/10, C08G 18/83

(54) **Addukte aus hydroxylgruppenhaltigen Epoxidharzen und Isocyanaten und deren Verwendung**
Adducts from hydroxyl groups-containing epoxy resins and isocyanates and their use
Adducts de résines époxydes hydroxylées et d'isocyanates et leur utilisation

(30) Priorität: 27.08.1990 CH 2766/90
(43) Veröffentlichungstag der Anmeldung: 04.03.1992
(73) Patentinhaber: Ciba Specialty Chemicals Holding Inc., 4057 Basel (CH)
(72) Erfinder: Munk, Kurt, Dr., W-7889 Grenzach (DE)

(56) Entgegenhaltungen:
- DE-A- 3 542 569
- US-A- 4 401 499
- PATENT ABSTRACTS OF JAPAN vol. 7, no. 201 (C-184)6. September 1983 & JP-A-58 098 325 ( SUMITOMO BAKELITE ) 11. Juni 1983
- INTERNATIONAL POLYMER SCIENCE AND TECHNOLOGY. Bd. 13, Nr. 8, 1986, SHAWBURY GB Seiten T/40 - T/41; Y. N. SMIRNOV ET AL.: 'Curing of epoxy-urethane oligomers'

## Beschreibung

Die Erfindung betrifft Addukte erhältlich durch Umsetzung von bestimmten hydroxylgruppenhaltigen Epoxidharzen mit Isocyanaten unter Feuchtigkeitsausschluss und im wesentlichen ohne Dabeisein eines Katalysators, deren Stabilisierung zu lagerfähigen Addukten durch Reaktion mit bestimmten Inhibitoren, härtbare Gemische enthaltend die besagten Addukte sowie die durch thermische Härtung der Gemische erhältlichen vernetzten Produkte.

Heisshärtbare Gemische auf Basis von Epoxidharzen und Di- oder Polyisocyanatverbindungen (EP/IC-Harze) sind bekannt. Als Härtungsmittel für solche Gemische werden beispielsweise in der EP-A 130,454 und in der EP-A 129,799 tertiäre Amine oder Imidazole, insbesondere Additionskomplexe von Bortrihalogeniden mit tertiären Aminen und Imidazolen oder Oniumsalze von tertiären Aminen und Imidazolen, eingesetzt.

In der DE-A 3,600,764 verwendet man für heisshärtbare Gemische aus Epoxidharzen und Polyisocyanatverbindungen tertiäre oder quaternäre Ammoniumsalze von alkylierend wirkenden oder sauren Estern von organischen Phosphonsäuren oder der Phosphorsäure. Ferner werden in der EP-A 319,473 bestimmte Cyanoacetamide zum Härten von Gemischen aus Epoxidharzen und Polyisocyanatverbindungen eingesetzt.

Die thermische Vernetzung dieser vorbekannten EP/IC-Harzsysteme ist stark exotherm, so dass dabei viel Wärme freigesetzt wird. Das führt zu hohen Temperaturspitzen während der Herstellung von Formkörpern. Diese Exothermiespitzen schädigen den Formstoff, vergrössern den Abkühlungsschwund und verursachen Spannungen und Risse im Formkörper.

Es wurde nun gefunden, dass die geschilderten Probleme nicht auftreten, wenn statt einem Gemisch aus Epoxidharzen und Isocyanaten bestimmte Addukte dieser Verbindungen verwendet werden.

Gegenstand vorliegender Erfindung sind lagerstabile isocyanatgruppenhaltige Addukte erhältlich durch Umsetzung (a) eines Epoxidharzes mit einem Hydroxylgruppengehalt von 0,02-1,5 Aequivalenten/kg und (b) eines Di- oder Polyisocyanats, wobei die Umsetzung unter Feuchtigkeitsausschluss und ohne Hinzufügung eines Katalysators durchgeführt wird, und anschließender Umsetzung des so erhaltenen Produkts mit einem Inhibitor (c).

Die erfindungsgemässen Addukte können mit den für EP/IC-Harzsysteme bekannten wärmeaktivierbaren katalytischen Härtungsmitteln in einer wenig exothermen Reaktion zu vernetzten Produkten mit ausgezeichneten thermischen, mechanischen und elektrischen Eigenschaften thermisch gehärtet werden.

Weitere Gegenstände der Erfindung sind somit auch härtbare Gemische enthaltend ein erfindungsgemässes Addukt und (d) einen wärmeaktivierbaren Katalysator sowie die daraus durch thermische Härtung erhältlichen vernetzten Produkte.

Zweistufige Härtungsverfahren für EP/IC-Harzsysteme sind in der Literatur bereits beschrieben. Diese Verfahren werden jedoch schon in der ersten Stufe in Gegenwart eines Katalysators durchgeführt und verlaufen über Zwischenprodukte, welche von den vorliegenden Addukten verschieden sind.

So offenbart die bereits oben erwähnte DE-A 3,600,764, dass die Härtung der EP/IC-Harzsysteme mit den gemäss dieser Literaturstelle verwendeten Härtungskatalysatoren zu einem beliebigen Zeitpunkt durch Abkühlung unterbrochen und zu einem späteren Zeitpunkt wieder fortgesetzt werden kann. Dabei wird zweckmässig die Reaktion zu einem Zeitpunkt unterbrochen, zu dem die nach dem Abkühlen erhaltene Mischung in einem "B-Zustand", d.h. in einem bei Raumtemperatur festen jedoch noch schmelzbaren Zustand, vorliegt.

Gemäss der EP-A 272,563 wird ein EP/IC-Harzsystem in Gegenwart eines tertiären Amins als Katalysator zu einem Zwischenprodukt umgesetzt, und die Reaktion wird bei einer Umsetzung von maximal 65 % der im Ausgangsgemisch vorliegenden Isocyanatgruppen durch Zugabe bestimmter Alkylierungsmittel, welche als Katalysatorgifte wirken, unterbrochen.

Sowohl das Zwischenprodukt gemäss der EP-A 272,563 als auch der "B-Zustand" gemäss der DE-A 3,600,764 weisen Oxazolidinon- und Isocyanuratgruppen auf, welche durch Reaktion der Epoxidgruppen des Epoxidharzes mit den Isocyanatgruppen des Polyisocyanats in Gegenwart von Katalysatoren entstehen. Dabei müssen sehr reine (vgl. z.B. Beispiel 6 der DE-A 3,600,764), d.h. möglichst hydroxylgruppenfreie Epoxidharze, verwendet werden, um eine vorzeitige Gelierung zu vermeiden.

Im US-Patent Nr. 4,401,499 werden lagerstabile isocyanatgruppenfreie Präpolymere beschrieben, die durch Umsetzung von Polyisocyanaten mit einem Überschuss an hydroxylgruppenhaltigen Epoxidharzen hergestellt werden. Durch Erhitzen können diese Präpolymeren wieder in Epoxide und Isocyanate gespalten werden, die anschliessend in Gegenwart geeigneter Katalysatoren ausgehärtet werden.

Im Gegensatz zu diesen vorbeschriebenen Reaktionen werden die vorliegenden Addukte durch Umsetzung von Epoxidharzen und Isocyanaten im wesentlichen ohne Dabeisein eines Katalysators hergestellt, d.h. bei der Herstellung der Addukte wird dem Reaktionsgemisch kein Katalysator speziell beigefügt. Dies schliesst aber kleinere Mengen eines gegebenenfalls in den Edukten, insbesondere in der Isocyanatkomponente (b), vorhandenen Katalysators nicht aus. Bekanntlich werden die auf dem Markt erhältlichen Isocyanate, welche teilweise modifiziert sind, unter Umständen unter Verwendung eines Katalysators hergestellt, und die Reste eines solchen Katalysators verbleiben im modifizierten Isocyanatprodukt. Bei der vorliegenden Herstellung der Addukte werden die Epoxidgruppen des Epoxidharzes nicht angegriffen, und der Epoxidgehalt des Reaktionsgemisches bleibt daher unverändert. Die Umsetzung erfolgt durch Reaktion der Hydroxylgruppen des Epoxidharzes, welches definitionsgemäss einen bestimmten Hydroxylgruppengehalt aufweisen muss, mit den Isocyanatgruppen des Isocyanats. Es wird vermutet, dass es dabei zuerst zur Urethanbildung und anschliessend zur Allophanatbildung kommt, wie im folgenden schematisch dargestellt:

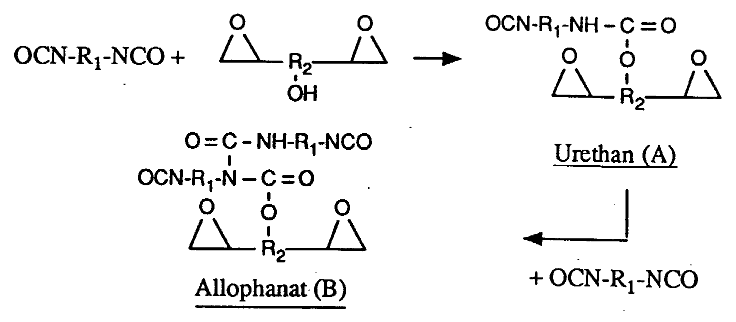

Wie eingangs erwähnt, können die erfindungsgemässen Addukte durch Umsetzung mit einem Inhibitor stabilisiert werden und zu lagerfähigen Addukten übergeführt werden.

Als Inhibitor geeignet sind insbesondere Verbindungen, welche in einer Michael-artigen 1,4-Addition mit Nukleophilen umgesetzt werden können. Beispiele geeigneter Inhibitoren sind Zimtsäure-, Methacrylsäure- und insbesondere Acrylsäureester. Besonders geeignete Inhibitoren sind Polyacrylate des Dipentaerythrits, wie Dipentaerythrit-hexaacrylat oder eine Mischung aus Dipentaerythrit-hexaacrylat und Dipentaerythrit-monohydroxy-pentaacrylat. Solche Produkte sind im Handel erhältlich, beispielsweise als ARONIX® M-400 der Fa. Toagosei Chem. Ind., Japan. Es wird vermutet, dass die Wirksamkeit des Inhibitors auf einer Michael-artigen Umsetzung der NH-Gruppe des Allophanats B und/oder des Urethans A mit den Acrylatgruppen beruht.

Die Menge des Inhibitors wird vorzugsweise so gewählt, dass pro OH-Gruppe des Epoxidharzes bzw. pro NH-Gruppe des Allophanats B und/oder des Urethans A etwa 1 bis 2, vorzugsweise etwa 1 bis 1,2 Zimtsäure-, Methacrylsäure- oder Acrylsäurestergruppen vorliegen.

Die mit dem Inhibitor (c) umgesetzten Addukte weisen eine hohe Lagerstabilität auf. So zeigen sie beispielsweise nach 6 Wochen bei 50°C einen Viskositätsaufbau von nur etwa 15 % auf. Auch die erfindungsgemässen härtbaren Gemische, welche die lagerstabilen Addukte und einen wärmeaktivierbaren Katalysator (d) enthalten, haben eine zufriedenstellend lange Gebrauchsdauer und können je nach Katalysator problemlos über 8 Tage oder noch länger bei Raumtemperatur gelagert werden.

Wegen der kleinen Exothermie während der Härtung können die vorliegenden Reaktionsgiessmassen problemlos in geschlossenen Systemen (Druckgelierverfahren) verarbeitet werden.

Bevorzugte Addukte der vorliegenden Erfindung sind solche, bei deren Herstellung die Mengen der Komponenten (a) und (b) so gewählt werden, dass pro Epoxidgruppe des Epoxidharzes (a) 0,1-40, insbesondere 0,2-10, Isocyanatgruppen des Di- oder Polyisocyanats (b) vorhanden sind.

Die Umsetzung erfolgt vorzugsweise bei 50-150°C während 5-15 Stunden, insbesondere bei 80-120°C während 8-12 Stunden.

Als Epoxidharz (a) kann im Prinzip jedes bekannte Epoxidharz mit dem definitions-gemässen Hydroxygruppengehalt eingesetzt werden.

### Beispiele für Epoxidharze sind:

I) Polyglycidyl- und Poly-(β-methylglycidyl)-ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in Gegenwart von Basen.
   Als Verbindung mit mindestens zwei Carboxylgruppen im Molekül können aliphatische Polycarbonsäuren verwendet werden. Beispiele solcher Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und Epichlorhydrin bzw. β-Methyl-epichlorhydrin unter alkalischen Bedingungen, oder in Anwesenheit eines sauren Katalysators und anschliessende Alkalibehandlung.
   Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)-anilin oder p,p'-Bis(2-hydroxyethylamino)diphenylmethan.
   Die Epoxidverbindungen können sich auch von einkernigen Phenolen ableiten, wie beispielsweise von Resorcin oder Hydrochinon, oder sie basieren auf mehrkernigen Phenolen, wie beispielsweise Bis(4-hydroxyphenyl)methan, 4,4'-Dihydroxybiphenyl, Bis(4-hydroxyphenyl)sulfon, 1,1,2,2-Tetrakis-(4-hydroxyphenyl)ethan, 2,2-Bis(4-hydroxyphenyl)propan, 2,2-Bis(3,5-dibrom-4-hydroxyphenyl)propan, sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉Alkylgruppen substituiert sind, wie beispielsweise 4-Chlorphenol, 2-Methylphenol oder 4-tert-Butylphenol, oder durch Kondensation mit Bisphenolen, so wie oben beschrieben.
III) Poly(N-glycidyl) Verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan.
   Zu den Poly(N-glycidyl) Verbindungen zählen auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly(S-glycidyl) Verbindungen, beispielsweise Di-S-glycidylderivate, die sich von Dithiolen, wie beispielsweise Ethan-1,2-dithiol oder Bis(4-mercaptomethylphenyl)ether ableiten.
V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat.

Es lassen sich auch Epoxidharze verwenden, bei denen die 1,2-Epoxidgruppen an unterschiedliche Heteroatome bzw. funktionelle Gruppen gebunden sind. Zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis(5,5-dimethyl-1-glycidylhydantoin-3-yl)-propan.

Bevorzugt verwendet werden Epoxidharze mit einem Epoxidgehalt von 2 bis 10 Aequivalenten/kg. Bevorzugt werden aliphatische, cycloaliphatische oder aromatische Epoxidharze eingesetzt.

Besonders bevorzugt als Epoxidharze werden Polyglycidylether von Bisphenolen, wie beispielsweise von 2,2-Bis(4-hydroxyphenyl)propan (Bisphenol A) oder Bis(4-hydroxyphenyl)methan (Bisphenol F), von Novolaken, die durch Umsetzung von Formaldehyd mit einem Phenol gebildet werden, oder von den oben erwähnten aliphatischen Diolen, insbesondere von Butan-1,4-diol.

Am meisten bevorzugt werden aromatische Epoxidharze, insbesondere solche auf Basis von Bisphenol A.

Als Di- oder Polyisocyanat (b) eignen sich bei der Herstellung der erfindungsgemässen Addukte vorzugsweise aliphatische, cycloaliphatische oder aromatische Isocyanate.

Bevorzugt werden Isomerengemische aus 4,4'- und 2,4'-Diisocyanatodiphenylmethan, polyolmodifizierte Polyisocyanate und Gemische von flüssigen Polyisocyanaten mit höhermolekularen Polyisocyanaten oder Carbodiimid-Polyisocyanaten eingesetzt.

Weitere verwendbare Polyisocyanate sind beispielsweise Hexan-1,6-diisocyanat, Cyclohexan-1,3-diisocyanat und Isomere, 4,4'-Diisocyanatodicyclohexylmethan, 3-Isocyanatomethyl-2,5,5-trimethylcyclohexylisocyanat, 1,3-Dimethylbenzol-ω,ω'-diisocyanat und Isomere, 1-Methylbenzol-2,4-diisocyanat und Isomere, Naphthalin-1,4-diisocyanat, Diphenylether-4,4'-diisocyanat und Isomere, Diphenylsulfon-4,4'-diisocyanat und Isomere sowie tri- oder höherfunktionelle Isocyanate, wie beispielsweise 3,3',4,4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen entständige freie Isocyanatgruppen und enthalten einen oder mehrere Uretdion- und/oder Isocyanuratringe. Verfahren zur Herstellung verschiedener Arten solcher Trimerer und Uretdione sind beispielsweise in den US-Patentschriften 3,494,888; 3,108,100 und 2,977,370 beschrieben.

Gegenstand vorliegender Erfindung ist auch ein Verfahren zur Herstellung der erfindungsgemässen Addukte, in dem ein Epoxidharz (a) mit einem Hydroxylgruppengehalt von 0,02-1,5 Aequivalent/kg und ein Di- oder Polyisocyanat (b) unter Feuchtigkeitsausschluss und im wesentlichen ohne Dabeisein eines Katalysators umgesetzt werden, und das so erhaltene Produkt gegebenenfalls anschliessend mit einem Inhibitor (c) umgesetzt wird.

Als wärmeaktivierbarer Katalysator (d) für die Härtung der erfindungsgemässen Addukte eignet sich im Prinzip jede als Härter für EP/IC-Harzsysteme bekannte Verbindung. Beispiele geeigneter Härter sind tertiäre Amine oder Imidazole, insbesondere Additionskomplexe von Bortrihalogeniden mit tertiären Aminen und Imidazolen oder Oniumsalze von tertiären Aminen und Imidazolen, wie in den EP-A 130,454 und EP-A 129,799 beschrieben, oder tertiäre oder quaternäre Ammoniumsalze von alkylierend wirkenden oder sauren Estern von organischen Phosphonsäuren oder der Phosphorsäure gemäss der DE-A 3,600,764, oder bestimmte Cyanoacetamide gemäss der EP-A 319,473.

Besonders geeignete Härter sind Sulfoniumsalze der Formel I bis IV 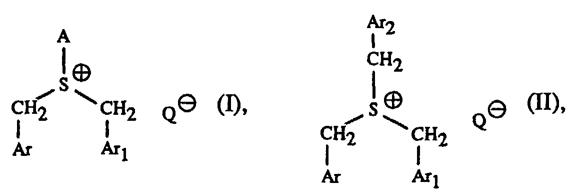 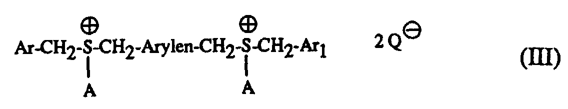 und 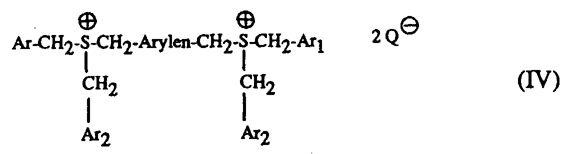 worin A für ein C₁-C₁₂-Alkyl, C₃-C₈-Cycloalkyl, C₄-C₁₀-Cycloalkylalkyl, unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinander je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Naphthyl bedeuten, Arylen je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Naphthylen bedeutet und Q^{⊖} für SbF₆^{⊖}, AsF₆^{⊖} oder SbF₅OH^{⊖} steht.

Vorzugsweise bedeutet A in den Formeln I und III ein C₁-C₁₂-Alkyl, Ar, Ar₁ und Ar₂ bedeuten in den Formeln I bis IV unabhängig voneinander je ein unsubstituiertes oder durch C₁-C₈-Alkyl, C₁-C₄-Alkoxy, Cl oder Br einfach oder mehrfach substituiertes Phenyl, und Q^{⊖} steht für SbF₆^{⊖} oder SbF₅OH^{⊖} , wie beispielsweise Dibenzylethyl-sulfoniumhexafluoroantimonat.

Die erfindungsgemässen Gemische enthalten als Komponente (c) vorzugsweise ein Sulfoniumsalz der Formel I oder II mit der oben bevorzugten Bedeutung von A, Ar, Ar₁, Ar₂ und Q^{⊖}.

Besonders bevorzugte Sulfoniumsalze sind solche der Formel II, worin Ar, Ar₁ und Ar₂ unabhängig voneinander je ein unsubstituiertes oder durch C₁-C₈-Alkyl, C₁-C₄-Alkoxy, Cl oder Br substituiertes Phenyl bedeuten und Q^{⊖} für SbF₆^{⊖} oder SbF₅OH^{⊖} steht, wie insbesondere Tribenzylsulfoniumhexafluoroantimonat oder Tris-(p-methylbenzyl)-sulfoniumhexafluoroantimonat.

Steht A in Formel I und III für ein C₁-C₁₂-Alkyl, so kann dieses geradkettig oder verzweigt sein. Beispielsweise kann A für ein Methyl, Ethyl, Isopropyl, n-Butyl, sek.-Butyl, tert.-Butyl, n-Octyl oder n-Dodecyl stehen.

Geeignete Cycloalkyle sind beispielsweise Cyclopropyl, Cyclopentyl, Cyclohexyl und Cyclooctyl.

Als Cycloalkylalkyle seine beispielsweise Cyclohexylmethyl und Cyclohexylethyl genannt.

Bedeuten A, Ar, Ar₁ und Ar₂ in den Formeln I bis IV ein substituiertes Phenyl bzw. Naphthyl, so können gleich oder verschieden substituiertes Phenyl oder Naphthyl vorliegen. Beispiele dafür sind p-Tolyl, Xylyl, Ethylphenyl, Methoxyphenyl, Ethoxyphenyl, p-Chlorphenyl, 2,4-, 3,4- oder 2,6-Dichlorphenyl, Bromphenyl, Acetylphenyl, Trimethylphenyl, Methylnapthyl, Methoxynaphthyl, Ethoxynaphthyl, Chlornaphthyl, Bromnaphthyl und Biphenyl.

Bedeutet Arylen in den Formeln III und IV ein substituiertes Phenylen oder Naphthylen, so können als solche beispielsweise Methylphenylen, Ethylphenylen, Methoxyphenylen, Ethoxyphenylen, Chlorphenylen, Dichlorphenylen, Bromphenylen, Acetylphenylen, Trimethylphenylen, Methylnapthylen, Methoxynaphthylen, Ethoxynaphthylen, Chlornaphthylen oder Bromnaphthylen stehen. Vorzugsweise bedeutet Arylen unsubstituiertes Phenylen oder Naphthylen.

Die in den erfindungsgemässen Gemischen enthaltenden Sulfoniumsalze der Formeln I und II können nach einem der in Houben-Weyl, Methoden der organischen Chemie, Band IX, Seiten 171 ff (1955), sowie Ergänzungsband E 11, Seiten 405 ff (1985), offenbarten Verfahren hergestellt werden, indem man beispielsweise ein Sulfid der Formel VI

Ar-CH₂-S-CH₂-Ar₁ (VI),

worin Ar und Ar₁ die gleiche Bedeutung wie in den obigen Formeln I oder II haben, entweder
(a) mit molaren Mengen eines Oxoniumsalzes der Formel VII 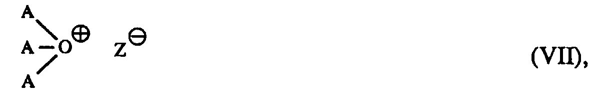 worin A die gleiche Bedeutung wie in obiger Formel I hat und Z^{⊖} für Q^{⊖}, SbCl₆^{⊖}, BF₄^{⊖} oder PF₆⁻ steht, zu Verbindungen der Formel I oder der Formel Ia 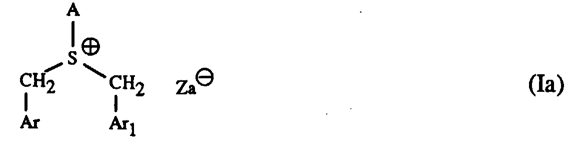 umsetzt, worin Za^{⊖} für SbCl₆^{⊖}, BF₄^{⊖} oder PF₆^{⊖} steht, und anschliessend die Verbindungen der Formel Ia durch Anionenaustausch mit einem Alkalimetallsalz oder einem quaternären Ammoniumsalz der Formel VIII

   Y^{⊕}Q^{⊖} (VIII),

   worin Y für ein Alkalimetallkation oder N(R₄)^{⊕} steht, wobei R ein Wasserstoff oder ein C₁-C₄-Alkyl bedeutet, und Q^{⊖} die gleiche Bedeutung wie in obiger Formel I hat, zu einer Verbindung der Formel I umsetzt, oder
(b) in Gegenwart einer starken Säure mit mindestens einer molaren Menge eines Alkohols der Formel IX

   Ar₂-CH₂-OH (IX),

   worin Ar₂ die gleiche Bedeutung wie in obiger Formel II hat, zu einem Sulfoniumsalz dieser Säure der Formel IIa 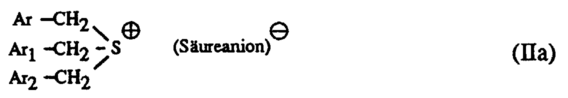 umsetzt, und anschliessend das Sulfoniumsalz der Formel IIa mit einem Alkalisalz oder einem quaternären Ammoniumsalz der Formel VIII zu einer Verbindung der Formel II umsetzt.

In analoger Weise können die erfindungsgemässen Verbindungen der Formeln III und IV hergestellt werden, indem man beispielsweise 1 Mol einer Verbindung der Formel X

Ar-CH₂-S-CH₂-Arylen-CH₂-S-CH₂-Ar₁ (X),

worin Ar und Ar₁ die gleiche Bedeutung wie in obiger Formel III oder IV haben, entweder
(a) mit 2 Mol eines Oxoniumsalzes der Formel VI zu Verbindungen der Formel III oder der Formel IIIa 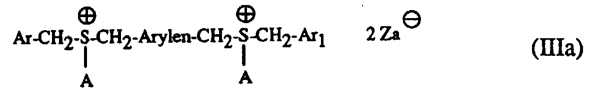 umsetzt, worin Za^{⊖} für SbCl₆^{⊖}, BF₄^{⊖} oder PF₆^{⊖} steht, und anschliessend die Verbindung der Formel IIIa durch Anionenaustausch mit einem Alkalimetallsalz oder einem quaternären Ammoniumsalz der Formel VIII zu einer Verbindung der Formel III umsetzt, oder
(b) in Gegenwart einer starken Säure mit 2 Mol eines Alkohols der Formel VIII zu einem Disulfoniumsalz dieser Säure gemäss Formel IVa 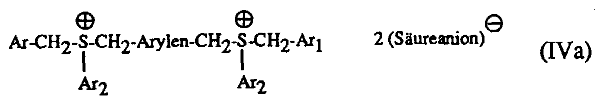 umsetzt und anschliessend das Disulfoniumsalz der Formel IVa mit einem Alkalisalz oder einem quaternären Ammoniumsalz der Formel VIII zu einer Verbindung der Formel IV umsetzt.

Die Verbindungen der Formeln VI, VII, VIII, IX und X stellen bekannte Verbindungen dar, die zum Teil im Handel erhältlich sind.

Beispielsweise werden Sulfide der Formel VI in Houben-Weyl, Band 9, Seite 93 (1955), oder Band E 11, Seite 158 (1985) beschrieben oder sind im Handel bei den Firmen Fluka und Aldrich erhältlich.

Oxoniumsalze der Formel VII sind zum Beispiel aus Houben-Weyl, Band 6/3, Seite 328 (1965), oder aus dem US-Patent Nr. 3 585 227 bekannt.

Alkalimetallsalze oder quaternäre Ammoniumsalze der Formel VIII, wie beispielsweise NaSbF₆, NaAsF₆ oder NH₆AsF₆, sind im Handel z.B. von der Firma Morton Thiokol erhältlich. Desgleichen sind Alkohole der Formel IX, wie beispielsweise Benzylalkohol oder chlorierte Benzylalkohole, im Handel erhältlich.

Verbindungen der Formel X können in bekannter Weise hergestellt werden, indem man beispielsweise 1 Mol eines unsubstituierten oder substituierten α,α'-Dihalogenmethylarylens der Formel XI

Hal-CH₂-Arylen-CH₂-Hal (XI)

in Gegenwart von Alkalilauge mit 2 Mol eines unsubstituierten oder substituierten Mercaptans der Formel XII

Ar-CH₂-SH bzw. Ar₁-CH₂-SH (XII)

zu Verbindungen der Formel X umsetzt.

Verbindungen der Formel I oder III, worin A für den Rest der Formel XIII 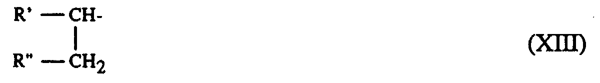 steht, worin R' und R" unabhängig voneinander je ein Wasserstoffatom oder zusammen mit dem Ethylenrest ein bis zu 12 C-Atome enthaltendes Alkyl oder ein bis zu 8 C-Atome enthaltendes Cycloalkyl bedeuten, können ferner so hergestellt werden, dass man ein Sulfid der Formel VI in Gegenwart einer starken Säure mit mindestens einer molaren Menge eines Olefins der Formel XIV

R'-CH = CH-R" (XIV)

zu einem Sulfoniumsalz der Formel XV bzw. XVI 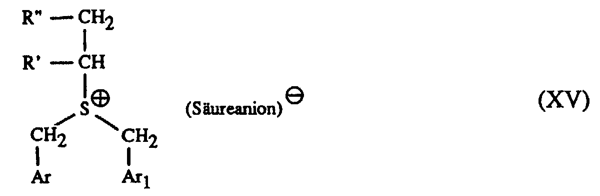 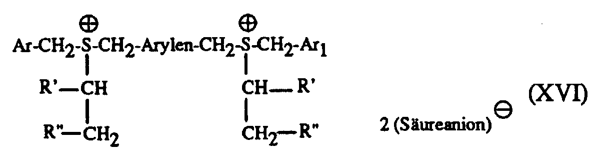 umsetzt und anschliessend das Sulfoniumsalz der Formel XV bzw. XVI mit einem Alkalisalz oder einem quaternären Ammoniumsalz der Formel VIII zu einer Verbindung der Formel I bzw. III, worin A den Rest der Formel XIII bedeutet, umsetzt.

Als Olefine der Formel XIV verwendet man beispielsweise Ethylen, Propylen, Buten-(1), Buten-(2), Isobutylen, Penten-(1), Penten-(2), Cyclobuten, Cyclopenten oder Cyclohexen und als starke Säuren beispielsweise H₂SO₄, HPF₆, HBF₄, HClO₄ oder CF₃SO₃H.

In den erfindungsgemässen härtbaren Gemischen wird das wärmeaktivierbare Härtungsmittel (d) zweckmässig in Mengen von 0,01 bis 10 Gew.-%, vorzugsweise von 0,1 bis 5 Gew.-%, insbesondere von 0,1 bis 2,5 Gew.-%, bezogen auf die Menge des Addukts, eingesetzt.

Die erfindungsgemässen heisshärtbaren Gemische können auch weitere, bekannte und üblicherweise in der Technik polymerisierbarer Materialien eingesetzte Zusatzstoffe enthalten. Beispiele für solche Zusatzstoffe sind Pigmente, Farbstoffe, Füllstoffe und Verstärkungsmittel, Flammhemmstoffe, Antistatika, Haftvermittler, Verlaufmittel, Antioxidantien und Lichtschutzmittel. Als Füllstoffe eignen sich mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit.

Die erfindungsgemässen heisshärtbaren Gemische lassen sich ganz allgemein zur Herstellung von gehärteten Produkten einsetzen und können in der dem jeweils speziellen Anwendungsgebiet angepassten Formulierung, beispielsweise als Beschichtungsmasssen, Lacke, Pressmassen, Tauchharze, Giessharze, Imprägnierharze, Laminierharze, 1- oder 2-Komponenten-Klebstoffe oder Matrixharze, eingesetzt werden.

Zur Aushärtung der erfindungsgemässen Gemische wendet man im allgemeinen Temperaturen im Bereich von 60 bis 250°C, vorzugsweise 60 bis 220°C, insbesondere 80 bis 200°C, an.

Die aus den erfindungsgemässen Gemischen durch thermische Härtung erhaltenen Produkte zeichnen sich durch ausgezeichnete thermische, mechanische und elektrische Eigenschaften aus.

Die Aushärtung erfolgt in der Regel unter gleichzeitiger Formgebung zu Formkörpern, Imprägnierungen, Beschichtungen oder Verklebungen.

Die folgenden Beispiele erläutern die Erfindung.

### Beispiele 1-6: Herstellung der Addukte (vgl. Tabelle 1)

### Beispiel 1: (NCO:EP im Molverhältnis 0,9:1,0)

200 Gew.-Teile eines Bisphenol-A-Epoxidharzes mit einem Epoxidgehalt von 5,2 Val/kg und einem OH-Gruppengehalt von 216 Val/kg werden mit 89 Gew.-Teilen eines präpolymerisierten Diisocyanatodiphenylmethan-Harzes mit einem NCO-Gehalt von 26,1 % und einer Viskosität von 140 mPa·s bei 25°C (ISONATE® M340 der Fa. Dow) und 89 Gew.-Teilen eines Diisocyanatodiphenylmethans mit einem NCO-Gehalt von 23 % und einer Viskosität von 15 mPa·s bei 25°C (BAYMIDUR® KL-3-5002 der Fa. Bayer) zusammen gemischt und auf 100°C unter Feuchtigkeitsausschluss erhitzt. Während der 10-stündigen Reaktionszeit unter Rühren ist die exotherme Reaktion so schwach, dass die eingestellte Reaktionstemperatur von 100°C in der Mischung nicht überschritten wird.
Nach 10 Stunden ist die Viskosität von ursprünglich 670 mPa·s (25°C) auf 1783 mPa·s (25°C) angestiegen, währenddem der NCO-Gehalt von 11,6 % auf 10,7 % sank. Der Epoxidgehalt der Reaktionsmischung bleibt bei 2,75 Val/kg unverändert.
Der Reaktionsmischung werden 3,78 Gew.-Teile Dipentaerythrit-hexaacrylat (ARONIX® M-400, Firma Toagosei Chemical Ind., Japan) bei 100°C beigegeben, und das Gemisch wird bei dieser Temperatur umgesetzt. Nach 60 Minuten ist die Reaktion abgeschlossen. Nach dem Abkühlen wird ein hellgelbes Epoxid-Isocyanataddukt IV mit den folgenden Eigenschaften erhalten:
Viskosität bei 25°C: 2250 mPa·s;
Epoxidgehalt: 2,75 Val/kg;
NCO-Gehalt: 10,5 %.

Entsprechend Beispiel 1 werden in den Beispielen 2 bis 6 unter Verwendung der gleichen Reaktanden Addukte mit anderen NCO:EP-Molverhältnissen hergestellt:

### Beispiel 2: (NCO:EP im Molverhältnis 6,0:1,0)

50 Gew.-Teile Bisphenol-A-Epoxidharz
164 Gew.-Teile Isocyanatharz (NCO-Gehalt 26,1 %)
164 Gew.-Teile Isocyanatharz (NCO-Gehalt 23,0 %)
3,8 Gew.-Teile Dipentaerythrit-hexaacrylat.

- Addukt I:: Viskosität bei 25°C: 285 mPa·s;
Epoxidgehalt: 0,69 Val/kg ;
NCO-Gehalt: 20,4 %.

### Beispiel 3: (NCO:EP im Molverhältnis 2,8:1,0)

100 Gew.-Teile Bisphenol-A-Epoxidharz
139 Gew.-Teile Isocyanatharz (NCO-Gehalt 26,1 %)
139 Gew.-Teile Isocyanatharz (NCO-Gehalt 23,0 %)
3,8 Gew.-Teile Dipentaerythrit-hexaacrylat.

- Addukt II:: Viskosität bei 25°C: 580 mPa·s;
Epoxidgehalt: 1,38 Val/kg;
NCO-Gehalt: 17,2 %.

### Beispiel 4: (NCO:EP im Molverhältnis 1,53:1,0)

150 Gew.-Teile Bisphenol-A-Epoxidharz
114 Gew.-Teile Isocyanatharz (NCO-Gehalt 26,1 %)
114Gew.-Teile Isocyanatharz (NCO-Gehalt 23,0 %)
3,8 Gew.-Teile Dipentaerythrit-hexaacrylat.

- Addukt III:: Viskosität bei 25°C: 1076 mPa·s;
Epoxidgehalt: 2,1 Val/kg;
NCO-Gehalt: 13,9 %.

### Beispiel 5: (NCO:EP im Molverhältnis 0,52:1,0)

250 Gew.-Teile Bisphenol-A-Epoxidharz
64 Gew.-Teile Isocyanatharz (NCO-Gehalt 26,1 %)
64 Gew.-Teile Isocyanatharz (NCO-Gehalt 23,0 %)
3,8 Gew.-Teile Dipentaerythrit-hexaacrylat.

- Addukt V:: Viskosität bei 25°C: 2860 mPa·s;
Epoxidgehalt: 3,4 Val/kg;
NCO-Gehalt: 7,4 %.

### Beispiel 6: (NCO:EP im Molverhältnis 0,26:1,0)

300 Gew.-Teile Bisphenol-A-Epoxidharz
39 Gew.-Teile Isocyanatharz (NCO-Gehalt 26,1 %)
39 Gew.-Teile Isocyanatharz (NCO-Gehalt 23,0 %)
3,8 Gew.-Teile Dipentaerythrit-hexaacrylat.

- Addukt VI:: Viskosität bei 25°C: 3960 mPa·s;
Epoxidgehalt: 4,1 Val/kg;
NCO-Gehalt: 4,1 %.

**Tabelle 1:**

| Herstellung der Addukte I-VI | | | | | | |
|---|---|---|---|---|---|---|
| Beispiel | 2 | 3 | 4 | 1 | 5 | 6 |
| Addukt | I | II | III | IV | V | VI |
| Bisphenol-A- Epoxidharz (Gew.-Teile) | 50 | 100 | 150 | 200 | 250 | 300 |
| | | | | | | |
| Isocyanatharz (NCO-Gehalt 26,1 %) (Gew.-Teile) | 164 | 139 | 114 | 89 | 64 | 39 |
| | | | | | | |
| Isocyanatharz (NCO-Gehalt 23,0 %) (Gew.-Teile) | 164 | 139 | 114 | 89 | 64 | 39 |
| NCO: EP-Molverhältnis | 6:1 | 2,8:1 | 1,53:1 | 0,9:1 | 0,52:1 | 0,26:1 |

### Beispiel 7: Herstellung von Formkörpern für Prüfzwecke (vgl. Tabelle 2)

### Aufbereitung der Reaktionsgiessharzmasse

378 Gew.-Teile der gemäss den Beispielen 1 bis 6 hergestellten Addukte I bis VI werden jeweils in einem Rührkessel vorgelegt und auf 50°C erwärmt. Dann werden 686 Gew.-Teile Quarzmehl Typ W12 der Quarzwerke Frechen (BRD) zugegeben und innerhalb 10 Minuten homogen eingemischt. Zu dieser Vormischung, die durch die Friktionswärme des Rührvorgangs auf ca. 45°C bleibt, werden 2 Gewichtsteile Katalysator Dimethylbenzylamin-Bortrichlorid-Komplex eingelöst. Während 2 Stunden wird die Reaktionsgiessharzmasse im Vakuum bei 1-2 mbar entgast, um anschliessend in auf 120°C vorgeheizte Prüfkörperformen gegossen zu werden. Die Masse geliert bei 120°C in ca. 15 Minuten. Nach 2 Stunden wird entformt, und die Prüfkörper werden 4 Stunden bei 150°C und 16 Stunden bei 200°C nachgehärtet.

Die Prüfkörper haben die in der Tabelle 2 aufgelisteten Eigenschaften.

**Tabelle 2:**

| Eigenschaften der Formkörper | | | | | | |
|---|---|---|---|---|---|---|
| Beispiel | 7.2 | 7.3 | 7.4 | 7.1 | 7.5 | 7.6 |
| Addukt | I | II | III | IV | V | VI |
| NCO:EP-Verhältnis | 6:1 | 2,8:1 | 1,53:1 | 0,9:1 | 0,52:1 | 0,26:1 |
| Glasumwandlungstemperatur (°C) (TMA) Mettler 4000 | 250 | 247 | 212 | 193 | 160 | 136 |
| Oxygen Index (%) ASTM D2863 | 43,7 | 37,0 | 37,7 | 39,3 | 46,2 | 43,1 |
| Brennbarkeit UL94-Stufe | 94 V-O | 94 V-O | 94 HB | 94 HB | 94 HB | 94 HB |
| Gelierzeit bei 140°C Gelnormgerät | 6'20" | 5'20" | 5' | 4'50" | 5'20" | 7'11" |
| E-Modul aus Biegeversuch ISO 178 (N/mm²) | 11760 | 11546 | 12094 | 11807 | 11657 | 10810 |
| Biegefestigkeit ISO 178 (N/mm²) | 126,9 | 134,5 | 139 | 151,7 | 154,6 | 159 |
| Randfaserdehnung (%) ISO 178 | 1,14 | 1,25 | 1,22 | 1,39 | 1,47 | 1,75 |
| Martens (°C) DIN 16945 | 263 | 241 | 221 | 188 | 167 | 153 |
| Kriechstromfestigkeit KA-Meth. (Stufe) DIN 53480 | KA 1 | KA 1 | KA 1 | KA 1/2 | KA 1/2 | KA 1/2 |

### Beispiel 8: Herstellung von Formkörpern für Prüfzwecke (vgl. Tabelle 3)

### Aufbereitung der Reaktionsgiessharzmasse

Die Aufbereitung des Beispiels 8 erfolgt gemäss der Prozedur des Beispiels 7. Als Katalysator werden jedoch 2,5 Gewichtsteile Dibenzyl-phenyl-sulfoniumhexafluorantimonat verwendet.

**Tabelle 3:**

| Eigenschaften der Formkörper | | | | | | |
|---|---|---|---|---|---|---|
| Beispiel | 8.2 | 8.3 | 8.4 | 8.1 | 8.5 | 8.6 |
| Addukt | I | II | III | IV | V | VI |
| NCO:EP-Verhältnis | 6:1 | 2,8:1 | 1,53:1 | 0,9:1 | 0,52:1 | 0,26:1 |
| Glasumwandlungstemperatur (°C) (TMA) Mettler 4000 | 292 | 258 | 227 | 205 | 185 | 149 |
| E-Modul aus Biegeversuch ISO 178 (N/mm²) | 12800 | 12600 | 12100 | 11700 | 11500 | 11200 |
| Biegefestigkeit ISO 178 (N/mm²) | 112 | 126 | 131 | 137 | 148 | 156 |
| Randfaserdehnung (%) ISO 178 | 1,1 | 1,2 | 1,2 | 1,25 | 1,3 | 1,4 |

### Beispiele 9 bis 12:

Verfährt man analog dem Beispiel 7, verwendet aber anstelle von 686 Gew.-Teile 610 Gew.-Teile Quarzmehl und für die Beispiele 10 und 12 anstelle von Dimethyl-benzyl-amin-Bortrichlorid-Komplex (als latenter Katalysator) eine entsprechende Menge des nicht-latenten Katalysators Dibenzylamins (nämlich 0,2 Gew.-Teile), so erhält man mit den Addukten II bzw. IV gemäss den Beispielen 3 und 1 Formkörper mit gleichguten Eigenschaften und den in der folgenden Tabelle aufgelisteten Eigenschaften:

| | | | | |
|---|---|---|---|---|
| Beispiel | 9 | 10 | 11 | 12 |
| Addukt | IV | IV | II | II |
| NCO:EP-Verhältnis | 0,9:1 | 0,9:1 | 2,8:1 | 2,8:1 |
| Katalysator | wie Bsp.7 | K | wie B.7 | K |
| Gebrauchsdauer | 48 St. | 30-110 M | 48 St. | 30-110 M |
| Gelierzeitdauer | 5 M | 4-9 M | 6 M | 4-9 M |
| Glasumwandlungstemp.°C | 240 | 220 | 250 | 230 |
| E-Modul aus Biegeversuch ISO 178 (N/mm²) | 11800 | 11200 | 12200 | 12000 |
| Biegefestigkeit ISO 178 (N/mm²) | 150 | 155 | 135 | 140 |
| K= Katalysator Dibenzylamin; M= Minuten. | | | | |

## Patentansprüche

1. Lagerstabiles isocyanatgruppenhaltiges Addukt erhältlich durch Umsetzung (a) eines Epoxidharzes mit einem Hydroxylgruppengehalt von 0,02-1,5 Aequivalenten/kg und (b) eine Di- oder Polyiocyanats, wobei die Umsetzung unter Feuchtigkeitsausschluss und ohne Hinzufügung eines Katalysators durchgeführt wird, und anschließender Umsetzung des so erhaltenen Produkts mit einem Inhibitor (c).

2. Addukt nach Anspruch 1, worin die Mengen der Komponenten (a) und (b) so gewählt werden, dass pro Epoxidgruppe des Epoxidharzes (a) 0,1-40, vorzugsweise 0,2-10, Isocyanatgruppen des Di- oder Polyisocyanats (b) vorhanden sind.

3. Addukt nach Anspruch 1 oder 2, erhältlich durch Umsetzung bei 50-150°C während 5-15 Stunden.

4. Addukt nach Anspruch 3, erhältlich durch Umsetzung bei 80-120°C während 8-12 Stunden.

5. Addukt nach einem der Ansprüche 1 bis 4, worin das Epoxidharz (a) ein aliphatisches, cycloaliphatisches oder aromatisches Epoxidharz ist.

6. Addukt nach Anspruch 5, worin das Epoxidharz (a) ein aromatisches Epoxidharz, insbesondere ein von Bisphenol A abgeleitetes Epoxidharz, ist.

7. Addukt nach einem der Ansprüche 1 bis 5, worin das Isocyanat (b) ein aliphatisches, cycloaliphatisches oder aromatisches Isocyanat ist.

8. Addukt nach Anspruch 7, worin das Isocyanat (b) ein Isomerengemisch aus 4,4'- und 2,4'-Diisocyanatodiphenylmethan, ein polyolmodifiziertes Polyisocyanat oder ein Gemisch von flüssigen Polyisocyanaten mit höhermolekularen Polyisocyanaten oder Carbodiimid-Polyisocyanaten darstellt.

9. Addukt nach Anspruch 1, worin der Inhibitor (c) ein Zimtsäure-, Methacrylsäure- oder insbesondere Acrylsäureester ist.

10. Addukt nach Anspruch 9, worin der Inhibitor (c) Dipentaerythrit-hexaacrylat oder eine Mischung aus Dipentaerythrit-hexaacrylat und Dipentaerythrit-monohydroxypentaacrylat ist.

11. Verfahren zur Herstellung eines Adduktes nach Anspruch wonach
(a) ein Epoxidharz mit einem Hydroxylgruppengehalt von 0,02-1,5 Aequivalenten/kg und
(b) ein Di- oder Polyisocyanat unter Feuchtigkeitsausschluss und im wesentlichen ohne Dabeisein eines Katalysators umgesetzt werden, und das so erhaltene Produkt anschliessend mit einem Inhibitor (c) umgesetzt wird.

12. Härtbares Gemisch enthaltend ein Addukt nach einem der Ansprüche 1 bis 10 und (d) einen wärmeaktivierbaren Katalysator.

13. Vernetzte Produkte erhältlich durch thermische Härtung des Gemisches nach Anspruch 12.

## Claims

1. A storage-stable, isocyanate-functional adduct obtainable by reacting (a) an epoxy resin having a hydroxyl content of 0.02-1.5 equivalents/kg and (b) a di- or polyisocyanate, said reaction being carried out with exclusion of moisture and without adding a catalyst, and then reacting the product so obtained with an inhibitor (c).

2. An adduct according to claim 1, wherein the amounts of the components (a) and (b) are so chosen that 0.1-40, preferably 0.2-10, isocyanate groups of the di- or polyisocyanate (b) are present per epoxy group of the epoxy resin (a).

3. An adduct according to claim 1 or 2, obtainable by carrying out reaction at 50-150°C for 5-15 hours.

4. An adduct according to claim 3, obtainable by carrying out reaction at 80-120°C for 8-12 hours.

5. An adduct according to one of claims 1 to 4, wherein the epoxy resin (a) is an aliphatic, cycloaliphatic or aromatic epoxy resin.

6. An adduct according to claim 5, wherein the epoxy resin (a) is an aromatic epoxy resin, especially an epoxy resin derived from bisphenol A.

7. An adduct according to one of claims 1 to 5, wherein the isocyanate (b) is an aliphatic, cycloaliphatic or aromatic isocyanate.

8. An adduct according to claim 7, wherein the isocyanate (b) is a mixture of 4,4'- and 2,4'-diisocyanatodiphenylmethane isomers, a polyol-modified polyisocyanate or a mixture of liquid polyisocyanates with relatively high molecular weight polyisocyanates or carbodiimide polyisocyanates.

9. An adduct according to claim 1, wherein the inhibitor (c) is a cinnamate, a methacrylate or, in particular, an acrylate.

10. An adduct according to claim 9, wherein the inhibitor (c) is dipentaerythritol hexaacrylate or a mixture of dipentaerythritol hexaacrylate and dipentaerythritol monohydroxypentaacrylate.

11. A process for the preparation of an adduct according to claim 1, which comprises reacting (a) an epoxy resin having a hydroxyl content of 0.02-1.5 equivalents/kg and (b) a di- or polyisocyanate, said reaction being carried out with exclusion of moisture and essentially in the absence of a catalyst, and then reacting the product so obtained with an inhibitor (c).

12. A curable mixture comprising an adduct according to one of claims 1 to 10 and (d) a heat-activatable catalyst.

13. A cross-linked product obtainable by thermal cure of the mixture according to claim 12.

## Revendications

1. Produit d'addition contenant des groupes isocyanate stable au stockage, que l'on peut préparer par réaction (a) d'une résine époxyde avec une teneur en groupes hydroxyle de 0,02 à 1,5 équivalents/kg, et (b) un di- ou polyisocyanate, la réaction ayant lieu à l'abri de l'humidité et sans addition d'un catalyseur, et par réaction ultérieure du produit obtenu avec un inhibiteur (c).

2. Produit d'addition selon la revendication 1, où les quantités des composants (a) et (b) sont choisies de façon telles, que par groupe époxyde de la résine époxyde (a), de 0,1 à 40, de préférence 0,2 à 10, de groupes isocyanate du di- ou polyisocyanate (b) soient présents.

3. Produit d'addition selon la revendication 1 ou 2, que l'on peut préparer par réaction à une température de 50 à 150 °C et une durée de 5 à 15 heures.

4. Produit d'addition selon la revendication 3, que l'on peut préparer par réaction entre à une tepérature de 80 et 120 °C et une durée de 8 à 12 heures.

5. Produit d'addition selon l'une des revendications 1 à 4, où la résine époxyde (a) est une résine époxyde aliphatique, cycloaliphatique ou aromatique.

6. Produit d'addition selon la revendication 5, où la résine époxyde (a) est une résine époxyde aromatique, en particulier une résine époxyde dérivant du bisphénol A.

7. Produit d'addition selon l'une des revendications 1 à 5, où l'isocyanate (b) est un isocyanate aliphatique, cycloaliphatique ou aromatique.

8. Produit d'addition selon la revendication 7, où l'isocyanate (b) représente un mélange d'isomères de 4,4'- et 2,4'-diisocyanatediphénylméthane, un polyisocyanate modifié par des polyols, ou un mélange de polyisocyanates liquides avec des polyisocyanates de haut poids moléculaire, ou des carbodiimide-polyisocyanates.

9. Produit d'addition selon la revendication 1, où l'inhibiteur (c) est un ester d'acide cinnamique, d'acide méthacrylique ou en particulier d'acide acrylique.

10. Produit d'addition selon la revendication 9, où l'inhibiteur (c) est l'hexaacrylate de pentaérythrirol ou un mélange d'hexaacrylate de dipentaérythritol et de monohydroxypentaacrylate de dipentaérythritol.

11. Procédé de préparation d'un produit d'addition selon la revendication 1, où on fait réagir (a) une résine époxyde avec une teneur en groupes hydroxyle de 0,02 à 1,5 équivalent/kg, et des di- ou polyisocyanates à l'abri de l'humidité et essentiellement sans catalyseur et ensuite, on fait réagir le produit obtenu avec un inhibiteur (c).

12. Mélange durcissable contenant un produit d'addition selon l'une des revendications 1 à 10, et (d) un catalyseur activable par la chaleur.

13. Produits réticulés que l'on peut préparer par durcissement thermique du mélange selon la revendication 12.
